Europäisches Patentamt

European Patent Office

Office européen des brevets

(11) Veröffentlichungsnummer: **0 154 189**
A2

(12) # EUROPÄISCHE PATENTANMELDUNG

(21) Anmeldenummer: 85101320.1

(22) Anmeldetag: 08.02.85

(51) Int. Cl.⁴: **C 08 J 3/12**
C 08 J 3/16, C 08 F 2/22
C 08 F 220/10

(30) Priorität: 17.02.84 DE 3405651

(43) Veröffentlichungstag der Anmeldung:
11.09.85 Patentblatt 85/37

(84) Benannte Vertragsstaaten:
DE FR GB IT NL SE

(71) Anmelder: Röhm GmbH
Kirschenallee Postfach 4242
D-6100 Darmstadt 1(DE)

(72) Erfinder: Klesse, Wolfgang, Dr.
Tucholskyweg 47
D-6500 Mainz 31(DE)

(72) Erfinder: Rauch, Hubert
Odenwaldstrasse 6
D-6108 Weiterstadt(DE)

(72) Erfinder: Siol, Werner, Dr.
Goerdelerweg34
D-6100 Darmstadt(DE)

(72) Erfinder: Sütterlin, Norbert, Dr.
Am Hang 4
D-6109 Mühltal - Nieder-Beerbach(DE)

(54) Pulverförmige Emulsionspolymerisate und Verfahren zu ihrer Herstellung.

(57) Pulverförmige Emulsionspolymerisate auf Basis von Acryl-monomeren mit einer Glastemperatur nicht unter 45°C lassen sich mit erhöhtem Schüttgewicht und vermindertem Feinstaubgehalt bei vermindertem Energiebedarf durch Sprühtrocknung einer vorzugsweise mehr als 50 Gew. -%igen, insbesondere mindestens 58 %igen bimodalen wäß-rigen Dispersion des Emulsionspolymerisats herstellen.

EP 0 154 189 A2

Pulverförmige Emulsionspolymerisate und Verfahren zu ihrer Herstellung

## Gebiet der Erfindung

Die Erfindung betrifft pulverförmige Emulsionspolymerisate auf Basis von Acrylmonomeren und ein Verfahren zu ihrer Herstellung durch Sprühtrocknung.

## Stand der Technik

Die Sprühtrocknung wäßriger Dispersionen ist ein technisch gebräuchliches Verfahren zur Gewinnung trockener Pulver von Emulsionspolymerisaten auf Acrylmonomer-Basis.

In der DE-OS 21 01 808 ist die Herstellung von PVC-Verarbeitungshilfsmitteln durch Sprühtrocknung einer wäßrigen Dispersion eines Emulsionspolymerisats aus Methylmethacrylat und Acrylsäureestern bekannt. Durch Sprühtrocknung unterhalb der Verglasungstemperatur werden Pulverkörnchen aus lose aggregierten Feinpartikeln erhalten, die sich beim Einarbeiten in plastifiziertes PVC durch einen besonders gleichmäßigen Aufschluß auszeichnen.

Die DE-AS 27 22 752 beschreibt die Herstellung von Plastisolen

- 2. -

aus einem Emulsionspolymerisat dessen Latexteilchen aus einem weicheren Kern und einer härteren Schale aufgebaut sind, sowie aus einem Weichmacher für das Polymerisat. Die wäßrige Dispersion des Emulsionspolymerisats wird durch Sprühtrocknung bei 50 - 100°C in ein trockenes Pulver übergeführt.

Nach DE-PS 2 512 238 werden durch Sprühtrocknen einer wäßrigen Dispersion gewonnene Pulver von Emulsionspolymerisaten als Bindemittel bei der Zubereitung von filmbildenden Überzugsmittellösungen für Arzneiformen verwendet. Die Emulsionspolymerisate sind in solcher Weise aus einem Gemisch von wasserlöslichen, z.T. salzbildenden Monomeren und wasserunlöslichen Comonomeren aufgebaut, daß sie in einem Teil des pH-Bereichs zwischen pH 1,5 und 8 wasserlöslich sind. Auch bei diesem Sprühtrocknungsverfahren wird Wert darauf gelegt, daß die Latexteilchen in den einzelnen Pulverkörnchen nicht völlig verschmelzen, sondern lose aggregiert und leicht zerteilbar sind.

Die durch Sprühtrocknung erhaltenen Pulver von Emulsionspolymerisaten aus Acrylmonomeren haben einige Nachteile. So liegt ihr Schüttgewicht im allgemeinen zwischen 300 und 350 g/l. Das Schüttgewicht liegt somit weit unter dem theoretischen Wert, den eine dichteste Packung aus kugelförmigen Pulverteilchen mit einer Dichte von 1 g/ml haben müßte, nämlich 740 g/l. Das niedrige Schüttgewicht ist auf innere Hohlräume in den Pulverkörnchen zurückzuführen. Die Körnchen haben im Mittel eine Größe von etwa 20 bis 150 µm und sind aus einer Aggregation von einigen Tausend bis einigen Millionen von Latexteilchen aufgebaut.

Das niedrige Schüttgewicht bedingt ein großes Lager- und Transportvolumen. Außerdem ist es schwierig, ein Pulver von so geringem Schüttgewicht mit einem anderen Pulver von höherem Schüttgewicht, wie z.B. einem PVC-Suspensionspolymerisat, gleichmäßig zu vermischen. Das Schüttgewicht läßt sich zwar durch eine stärkere Verglasung der Latexteilchen in den einzelnen Körnchen erhöhen, jedoch werden die Anwendungseigenschaften dadurch beeinträchtigt.

Die durch Sprühtrocknung unmittelbar hergestellten Pulver enthalten stets einen beträchtlichen Anteil Feinstaub. Bei der Handhabung der Pulver wird der Feinstaub aufgewirbelt und gelangt in die Atemluft, was arbeitshygienisch bedenklich ist. Daher wurden die zulässigen Grenzwerte für den Feinstaubgehalt in der Luft eines Arbeitsplatzes in letzter Zeit herabgesetzt. Es ist technisch aufwendig, den Feinstaub durch Sieben oder Windsichten abzutrennen.

Zur Sprühtrocknung können nur dünnflüssige, sprühbare Dispersionen eingesetzt werden. Sie müssen daher häufig mit Wasser auf einen geringeren Feststoffgehalt verdünnt werden, um die Viskosität zu senken. Das zugesetzte Wasser muß jedoch bei der Sprühtrocknung wieder verdampft werden und erfordert einen zusätzlichen Energiebedarf.

Aufgabe und Lösung

Der Erfindung liegt die Aufgabe zugrunde, das Schüttgewicht von pulverförmigen Emulsionspolymerisaten, die zu einem wesentlichen Teil aus Acrylmonomeren aufgebaut sind und eine Glastemperatur nicht unter 45°C haben, zu erhöhen und ihren Gehalt an

- 4 -

Feinstaub herabzusetzen, ohne die gewünschte Feinstruktur der Pulverkörner nachteilig zu verändern. Ein weiteres Ziel der Erfindung liegt in der Verminderung des Energiebedarfs und der Steigerung der Produktivität bei der Herstellung der Pulver durch Sprühtrocknung.

Es wurde gefunden, daß die gestellte Aufgabe durch ein pulverförmiges Emulsionspolymerisat der genannten Art gelöst wird, dessen aggregierte Latexteilchen in einer bimodalen Teilchengrößenverteilung vorliegen.

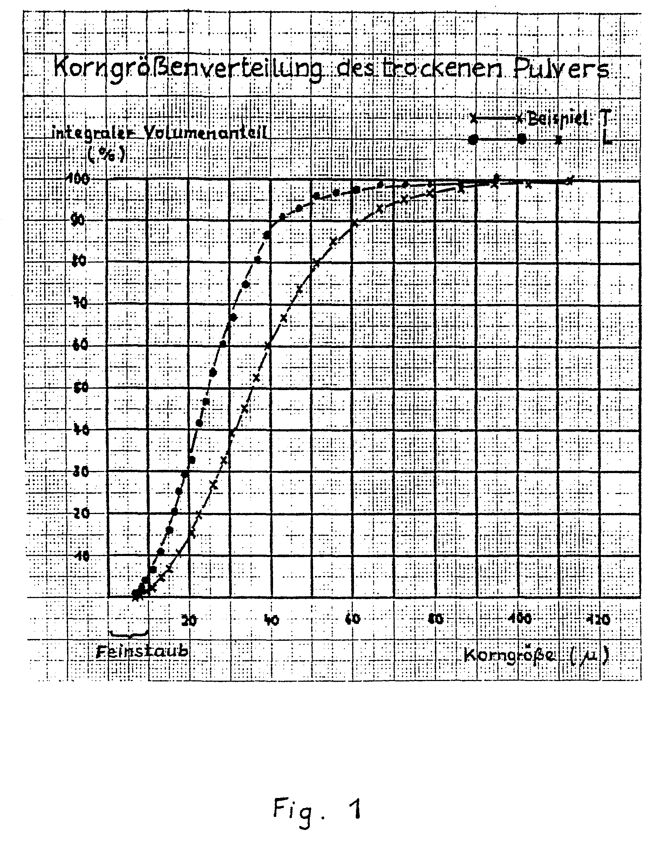

Die ursprünglichen Latexteilchen des zugrundeliegenden Emulsionspolymerisats sind bei 10.000- bis 15.000-facher Vergrößerung, beispielsweise in einer transmissions-- elektronenmikroskopischen oder in einer rasterelektronenmikroskopischen Aufnahme, in den Pulverteilchen oder in den durch Zermahlen hergestellten Bruchstücken zu erkennen. Wenn auch mit zunehmender Verglasung die Unterscheidung einzelner Teilchen schwieriger wird, läßt sich die aus größeren und kleineren Latexteilchen zusammengesetzte Matrix und das Größenverhältnis der Teilchen erkennen. Eine transmissions- elektronenmikroskopische Aufnahme eines erfindungsgemäßen Pulverkorns, das zu 75 Vol.-% aus großen Teilchen und zu 25 Vol.-% aus kleinen Teilchen besteht, deren Größenverhältnis 3,2 : 1 beträgt, ist als Figur 2 beigefügt. (Beispiel 1)

An der zugrundeliegenden wäßrigen Dispersion des Emulsionspolymerisats läßt sich die bimodale Teilchengrößenverteilung erkennen, wenn man die Volumenverteilung der Teilchengröße ermittelt. Dazu eignet sich insbesondere die Ultrazentrifugenmethode nach Scholtan und Lange (Kolloid-Zeitschrift und Zeitschrift für Polymere, Band 250 (1972), Seiten 782 - 706).

In typischen bimodalen Dispersionen zeigt die Volumenverteilung zwei getrennte Maxima bei verschiedenen Teilchengrößen. Die Maxima liegen vorzugsweise bei Teilchengrößen, die sich durch einen Faktor zwischen 1,2 und 20, vorzugsweise 1,8 und 8 unterscheiden.

## Vorteile der Erfindung und Anwendung des Pulvers

Das Schüttgewicht der erfindungsgemäß hergestellten Pulver liegt um 10 bis 30 % höher als dasjenige eines gleichartigen unimodalen Emulsionspolymerisats, das unter gleichen Bedingungen sprühgetrocknet worden ist. Die Erhöhung des Schüttgewichts ist um so stärker, je höher der Feststoffgehalt der zur Sprühtrocknung eingesetzten Dispersion liegt.

Der Feinstaubgehalt liegt in sprühgetrockneten Pulvern aus unimodalen Dispersionen im allgemeinen zwischen 5 und 10 Gew.-%, in manchen Fällen auch darüber. Besonders hoch ist der Feinstaubgehalt von Pulvern, die aus sehr lose aggregierten Feinpartikeln aufgebaut sind. In den Pulvern gemäß der Erfindung ist der Feinstaubgehalt auf weniger als 5 Gew.-%, in günstigen Fällen sogar unter 1 Gew.-%, vermindert. Eine Korngrößenverteilungskurve für ein typisches Pulver gemäß der Erfindung ist in Figur 1 wiedergegeben. Zum Feinstaubgehalt rechnen nach der DFG-Mitteilung XIX über "Maximale Arbeitsplatzkonzentrationen und biologische Arbeitsstofftoleranzwerte" (1983) alle Teilchen einer Größe unter 10 µm. Überwiegend sind sie unter 5 µm groß. Wenn sie mit der Atemluft in die Lunge gelangen, vermögen sie in die Alveolen einzudringen, was zu Schädigungen führen kann. Durch den verminderten Feinstaubgehalt wird es erleichtert, bei der Handhabung des Pulvers den Feinstaubgehalt der Luft unterhalb

- 6. -

der zulässigen Grenze zu halten. Die Verminderung der Feinstaubbildung tritt um so deutlicher in Erscheinung, je höher
der Feststoffgehalt der Dispersion liegt.

Zur Sprühtrocknung lassen sich nur Dispersionen einer begrenzten Viskosität einsetzen, die im einzelnen vom Aufbau der
Sprühtrocknungsanlage abhängt. Da die Viskosität einer Dispersion mit ihrem Feststoffgehalt steigt, bedeutet die Viskositätsgrenze gleichzeitig eine Grenze des Feststoffgehaltes.
Dispersionen mit einer über dem Grenzwert liegenden Viskosität
müssen mit Wasser auf die gerade noch sprühbare Viskosität
verdünnt werden. Bimodale Dispersionen haben bekanntlich bei
gleichem Feststoffgehalt eine niedrigere Viskosität als unimodale Dispersionen, bzw. bei gleichgroßer Viskosität einen
höheren Feststoffgehalt. Daraus ergibt sich, daß man in der
gleichen Sprühtrocknungsanlage bimodale Dispersionen von
höherem Feststoffgehalt verarbeiten kann als unimodale Dispersionen. Dadurch wird der Energiebedarf für die Verdampfung
des Wassers erheblich vermindert. So müssen für die Herstellung
von 100 kg Polymerisatpulver aus einer 50 %igen Dispersion
100 kg Wasser und aus einer gleichviskosen, bimodalen 55 %igen
Dispersion nur 82 kg Wasser verdampft werden. Das entspricht
einer Energieeinsparung von 18 Prozent. Da die Kapazität der
Sprühtrocknungsanlage durch die pro Zeiteinheit verdampfbare
Wassermenge bestimmt wird, steigt in entsprechender Weise
gleichzeitig die Produktivität, bezogen auf die Pulverausbeute.

Infolge ihrer verhältnismäßig niedrigen Viskosität lassen sich
die wegen der Verminderung des Feinstaubgehalts und der Erhöhung des Schüttgewichts besonders vorteilhaften hochkonzentrierten bimodalen Dispersionen in den meisten technischen
Sprühtrocknungsanlagen noch gut verarbeiten.

- 7 -

Die erfindungsgemäßen Pulver lassen sich nicht nur wirtschaftlicher herstellen, sondern bieten auch dem Anwender durch die verminderte Feinstaubentwicklung und das geringere Lager- und Transportvolumen beträchtliche Vorteile. Sie lassen sich auch wesentlich leichter mit Pulvern höheren Schüttgewichts, wie PVC-Pulver, homogen vermischen. Die Pulver werden daher mit Vorteil auf allen Gebieten angewandt, wo bisher schon sprühgetrocknete Emulsionspolymerisatpulver eingesetzt werden. Typische Anwendungsgebiete für sprühgetrocknete Emulsionspolymerisate auf Basis von Acrylmonomeren sind Modifier zur Verbesserung der plastischen Verarbeitbarkeit oder zur Erhöhung der Schlagzähigkeit von thermoplastischen Formmassen, insbesondere PVC, schnell lösliche Überzugs- und Bindemittel für Lacke oder Druckfarben auf Basis organischer Lösungsmittel, Plastisole, blockungsverhindernde Zusätze für pigmentfreie Schlußlacke für Kunstleder und dergleichen. Konkrete Beispiele für derartige Anwendungen wurden im Abschnitt "Stand der Technik" bereits erwähnt.

Aufbau und Herstellung der Emulsionspolymerisate

Unter Emulsionspolymerisaten werden die in einer wäßrigen Phase durch radikalische Polymerisation mittels wasserlöslicher Initiatoren von nicht oder höchstens begrenzt wasserlöslichen äthylenisch ungesättigten Monomeren oder Monomerengemischen in Form eines Latex erzeugten Polymerisate verstanden.

Das Emulsionspolymerisat ist überwiegend, in der Regel zu mehr als 70 Gew.-%, aus Acrylmonomeren oder deren Gemisch mit Styrolen aufgebaut. Unter Acrylmonomeren werden Derivate der Acryl- und der Methacrylsäure verstanden. Dazu gehören als wichtigste Gruppe diese Säuren selbst, ihre Nitrile und die Alkylester, die in der Regel 1 bis 20 C-Atome im Alkylrest

- 8 -

enthalten. Die Acrylmonomeren dieser Gruppe bilden vorzugsweise wenigstens 50, und besonders bevorzugt wenigstens 80 Gew.-% des Emulsionspolymerisats. Weitere Acrylmonomere, die meistens nur in geringen Anteilen zur Modifizierung und nur in Ausnahmefällen als Hauptbestandteile des Emulsionspolymerisats in Betracht kommen, sind Acrylamid, Methacrylamid, deren N-Methylolverbindungen und N-Methyloläther, Hydroxyalkylester und Hydroxyalkylamide der Acryl- oder Methacrylsäure, Äther dieser Hydroxyverbindungen, Glycidylester der Acryl- oder Methacrylsäure, Aminoalkylester und Aminoalkylamide der Acryl- oder Methacrylsäure sowie deren Quaternierungsprodukte. Styrole können neben Acrylmonomeren einen wesentlichen Anteil des Emulsionspolymerisats bilden. Außer Styrol selbst gehören dazu Vinyltoluol, ∝-Methylstyrol und andere alkylierte Styrole.

Als Comonomere, die nicht zu den Acrylmonomeren gehören, können damit mischpolymerisierbare, äthylenisch ungesättigte, radikalisch polymerisierbare bzw. copolymerisierbare Verbindungen am Aufbau des Emulsionspolymerisats beteiligt sein, in der Regel zu weniger als 30 Gew.-%. Dazu gehören beispielsweise Maleinsäure, Maleinsäureanhydrid, Itakonsäure, Vinylimidazol, Vinylpyrrolidon, Vinylester und Vinylhalogenide. Auch vernetzende Monomere, die zwei oder mehr polymerisierbare Kohlenstoff-Doppelbindungen enthalten, können am Aufbau beteiligt sein. Das Molekulargewicht des Emulsionspolymerisats kann durch Regler, wie Mercaptane oder Thioglykolsäureester, herabgesetzt sein.

Das Emulsionspolymerisat enthält zwei Teilchenfamilien mit deutlich getrennten Maxima in der Teilchengrößenverteilungskurve. Um eine deutlichere Wirkung zu entfalten, sollte keine

- 9 -

der beiden Teilchenfamilien einen Anteil von weniger als 5 Gew.-% des gesamten Emulsionspolymerisats bilden. In der Regel haben die feineren Latexteilchen eine Größe zwischen 0,02 und 1,7 μm, vorzugsweise zwischen 0,02 und 0,5 μm und bilden einen Anteil von 5 bis 80 Gew.-%, vorzugsweise 10 bis 50 Gew.-%, während die gröberen Teilchen den verbleibenden Anteil ausmachen und eine Größe zwischen 0,2 bis 2 μm, vorzugsweise 0,2 bis 0,6 μm haben.

Das Emulsionspolymerisat hat eine Glastemperatur über 45°C, vorzugsweise über 55°C. Die Glastemperatur kann nach DIN 7724 bestimmt werden. Wenn sich aus der Bestimmung der Glastemperatur für ein Emulsionspolymerisat mehrere Übergangsbereiche bei verschiedenen Temperaturen ergeben, so genügt es, wenn sich das Polymermaterial, welches die äußere Schale der einzelnen Latexteilchen bildet, durch einen Übergangsbereich nicht unter 45°C zu erkennen gibt. Dispersionen von Polymerisaten mit einer darunter liegenden Glastemperatur sind in technischen Sprühtrocknungsanlagen nicht mehr wirtschaftlich herstellbar. Die Glastemperatur wird in an sich bekannter Weise durch die Auswahl der am Aufbau des Emulsionspolymerisats beteiligten Monomeren festgelegt. Um die genannte Grenze der Glastemperatur zu überschreiten, ist ein erheblicher Anteil von "hartmachenden" Monomeren erforderlich; dazu zählen die niederen Methacrylsäurealkylester mit 1 bis 3 C-Atomen im Alkylrest, Styrole, Methacrylsäure, Acrylnitril und Methacrylnitril.

Bimodale Dispersionen, aus denen die erfindungsgemäßen Pulver herstellbar sind, lassen sich auf zwei verschiedenen Wegen darstellen, nämlich durch Vermischen zweier Dispersionen unterschiedlicher Teilchengröße oder durch stufenweise Polymerisation. Beim erstgenannten Verfahren werden zwei unimodale Dispersionen getrennt voneinander hergestellt und anschließend in einem solchen Verhältnis vermischt, daß jede der beiden Dispersionen eine Teilchenfamilie gewünschter Größe und Menge zu der entstehenden bimodalen Dispersion beisteuert.

Die Teilchengrößenmaxima der getrennt hergestellten Dispersionen müssen entsprechend den für die zu erzeugende bimodale Dispersion geltenden Forderungen bei deutlich verschiedenen Teilchengrößen liegen. Die Teilchengröße und die Teilchengrößenverteilung lassen sich bekanntlich bei der Herstellung unimodaler Dispersionen gezielt einstellen, vor allem durch die Emulgatorkonzentration während der Teilchenbildungsphase zu Beginn der Emulsionspolymerisation; vgl. DE-PS 1 804 159. Für die Herstellung grobteiliger Dispersionen wird häufig die sogenannte Saatlatexmethode angewandt, bei der man einen nach Teilchenzahl und -größe bekannten Latex vorlegt und seine Teilchen durch weitere Polymerisation ohne Bildung neuer Teilchen bis zur gewünschten Größe wachsen läßt.

Die unimodalen Dispersionen können mit Feststoffgehalten bis zu etwa 60 Gew.-% hergestellt werden; ein dafür geeignetes Verfahren ist in DE-AS 19 10 488 beschrieben. Die Viskositäten der unimodalen Dispersionen können gegebenenfalls über dem für die Sprühtrocknung geeigneten Bereich liegen; das gilt namentlich für die feinteilige Dispersion. Ihre bimodale Mischung hat in der Regel eine niedrigere Viskosität. Das Mischverfahren bietet die Möglichkeit, Dispersionen unterschiedlich zusammengesetzter Polymerisate einzusetzen, wodurch sich gegebenenfalls besondere Effekte erzielen lassen.

- 11 -

Für die unmittelbare Herstellung bimodaler Dispersionen auf Basis von Acrylmonomeren ist eine Anzahl von Verfahren bekannt.

Nach US 3 248 356 gibt man einige Zeit nach dem Start einer Emulsionspolymerisation erneut eine solche Emulgatormenge in die Wasserphase, daß ein zweiter Teilchenbildungsprozeß abläuft. Die zuletzt gebildeten Teilchen bleiben bei der Fortsetzung der Emulsionspolymerisation hinter den zuerst gebildeten Teilchen zurück, so daß zwei Teilchenfamilien von unterschiedlicher Größe entstehen.

Eine ähnliche Arbeitsweise wird nach US-PS 4 254 004 und im Beispiel 6 der EP-A 41 125 angewandt. Die Bildung einer neuen Teilchenfamilie in einer zweiten Teilchenbildungsphase hat den Nachteil, daß sich das Größen- und Mengenverhältnis der beiden Teilchenfamilien nur schwer reproduzierbar auf vorbestimmte Werte einstellen läßt. Daher werden zur Herstellung der erfindungsgemäßen Pulver bevorzugt Dispersionen eingesetzt, die gemäß EP-A 81 083 durch Einsatz zweier verschiedener Saatlatizes erzeugt worden sind. Bei diesem Verfahren läßt sich die Zahl und Größe der Teilchen beider Familien im voraus genau festlegen, so daß bimodale Dispersionen mit stets gleichbleibenden Eigenschaften hergestellt werden können. Nach diesem Verfahren sind sprühtrocknungsfähige Dispersionen auf Acrylmonomerbasis mit Feststoffgehalten bis über 65 Gew.-% herstellbar.

Das Sprühtrocknungsverfahren

Technische Sprühtrocknungsanlagen arbeiten überwiegend in der

- 12 -

Weise, daß eine Dispersion am Kopf einer turmartigen Trocknerkammer zu einem Aerosol zerstäubt und mit einem oben eintretenden Heißluftstrom nach unten befördert wird. Die Luft
nimmt das Wasser aus den Dispersionströpfchen auf, so daß
diese am Boden des Trockenraumes als trockene Pulverkörnchen
ankommen. Zur Abtrennung der Pulverkörnchen wird der am
unteren Ende des Trockenraumes austretende Luftstrom in einen
Zentrifugalabscheider (Zyklonkessel) geleitet, aus dem das
Pulver entnommen wird.

Die Bauweise und die Grenzen der Betriebsbedingungen einer
technischen Sprühtrocknungsanlage beeinflussen die Beschaffenheit der Pulverkörnchen in erheblichem Maße. Daher kann die
Sprühtrocknung der gleichen Dispersion in verschiedenen Sprühtrocknungsanlagen zu Pulvern führen, die sich in der Korngröße, -gestalt und -beschaffenheit, in der Korngrößenverteilung und im Schüttgewicht erheblich unterscheiden. Maßstab
für den durch die Erfindung erreichbaren Vorteil sind daher
die in der gleichen Sprühtrocknungsanlage aus unimodalen
Dispersionen hergestellten Pulver.

Die Dispersion kann mittels einer Zweistoffdüse, einer
Druckdüse oder einer rotierenden Lochscheibe zu einem Aerosol
versprüht werden. Je nach der Beschaffenheit der Anlage können
im allgemeinen Dispersionen mit Viskositäten bis zu 2000,
gegebenenfalls bis 4000 mPa.s verarbeitet werden. Der Feststoffgehalt liegt in der Regel so hoch wie herstellungsbedingt
möglich, vorzugsweise über 50 Gew.-%, bzw. 45 Vol.-%.Oft ist
es schwierig - vor allem bei emulgatorarmen Dispersionen -
Feststoffgehalte über 55 Gew.-% (bzw. 50 Vol.-%), insbesondere
über 58 Gew.-% (bzw. 53 Vol.-%) zu erreichen, jedoch ist
gerade der Einsatz dieser hochkonzentrierten Dispersionen für
die vorliegende Erfindung besonders vorteilhaft. Die Prozentwerte beziehen sich jeweils auf den Polymerisat-

- 13 -

anteil, bezogen auf die gesamte Dispersion. Sowohl die
wirtschaftlichen Vorteile bei der Herstellung als auch die
technologischen Vorteile bei der Anwendung der erfindungsgemäßen Pulver treten umso mehr in Erscheinung, je höher der
Feststoffgehalt der eingesetzten Dispersionen liegt. Neben dem
Feststoffgehalt übt auch der Emulgator einen Einfluß auf die
Kornstruktur des Pulvers aus.

Die in den Trockner eintretende Luft hat meistens eine
Temperatur im Bereich von 110 bis 250°C, insbesondere 130 bis
200°C und liegt somit weit über der Glastemperatur des Polymerisats, die meist nicht über 100°C liegt. Solange die Dispersionströpfchen noch Wasser enthalten, steigt ihre Temperatur nicht über etwa 50 bis 60°C an. Erst wenn das Wasser
vollständig verdampft ist, steigt die Temperatur des Pulverkörnchens auf die Temperatur der umgebenden Luft an. Die
Lufttemperatur im Trockner sinkt von Lufteintritt bis zum
Luftaustritt durch Abgabe der Verdunstungswärme für das verdampfende Wasser stetig ab. Die Endtemperatur ergibt sich aus
der Menge und Temperatur der eingeblasenen Luft und aus der
durchgesetzten Dispersionsmenge und läßt sich durch diese
Größen beeinflussen.

Die Höchsttemperatur, die die Pulverkörnchen in dem Trockner
erreichen und die in der Regel am Luftaustritt herrscht, hat
einen erheblichen Einfluß auf die Beschaffenheit der Pulverkörner. Liegt die Temperatur deutlich über der Glastemperatur,
so sintern die Latexteilchen in jedem Pulverkorn zu einer weitgehend homogenen Masse zusammen. Das Korn ist hart und spröde, in Lösungsmitteln nur langsam löslich und beim Einarbeiten in eine Formmassenschmelze nur nach langem Plastifizieren homogen verteilbar. Bei derartigen Pulvern sind die Vorteile der Erfindung nicht mehr deutlich zu erkennen. Das Schüttgewicht ist zwar noch höher als bei niedrigerer Endtemperatur, jedoch ist ein nahezu gleichgroßes Schüttgewicht auch erreichbar, wenn eine unimodale Dispersion zu völlig verglasten Körnchen sprühgetrocknet wird.

Der Unterschied im Schüttgewicht von sprühgetrockneten uni- und bimodalen Dispersionen nimmt mit abnehmender Verglasung der Pulverkörnchen zu und ist am größten, wenn die Pulverkörnchen nur aus lose aggregierten Latexteilchen zusammengesetzt sind und sich fast ohne mechanischen Widerstand zerdrücken oder zerteilen lassen. Derartige Pulver lassen sich in Lösungsmitteln schnell auflösen und in Polymerisatschmelzen schnell und gleichmäßig verteilen. Sie entstehen bei Endtemperaturen, die deutlich unterhalb der Glastemperatur liegen. In diesem Bereich ist das Sprühtrocknungsverfahren besonders wirtschaftlich durchführbar.

Bei Endtemperaturen, die nahe bei der Glastemperatur jedoch
*)
nicht darüber liegen, lassen sich Zwischenzustände zwischen loser Aggregation und völliger Verglasung gezielt einstellen. Das Aufschmelzverhalten beim Einarbeiten des Pulvers in eine Formmasse oder das Löseverhalten beim Gelieren eines Plastisols können durch sorgfältige Steuerung des Verglasungsgrades stark beeinflußt und zu einem Optimalzustand geführt werden, der zwischen den Extremzuständen liegt. Mit steigendem Verglasungsgrad nimmt der Widerstand beim Zerdrücken oder Zerteilen von Pulverkörnchen zu, ebenso die Lichtdurchlässigkeit

*) wesentlich

- 15 -

des einzelnen Körnchens. Unter dem Mikroskop, insbesondere dem Stereo-Auflichtmikroskop bei 40-facher Vergrößerung, erscheinen lose aggregierte Körnchen wie Schnee und völlig verglaste Teilchen wie Eis, während die Zwischenzustände ein ähnliches Bild wie die makroskopisch bekannten Übergangszustände von Schnee in Eis darbieten. Die Verglasung der Latexteilchen sollte nicht den Grad erreichen, an welchem die aggregierten Teilchen im elektronenmikroskopischen Bild nicht mehr zu erkennen sind.

Die mittlere Korngröße der erfindungsgemäßen Pulver liegt zwischen 20 bis 500 µm und bevorzugt zwischen 30 und 150 µm. Der Feinstaubanteil hängt in jedem Falle stark von den Sprühbedingungen und den Eigenschaften der Sprühtrocknungsanlage ab. Unter gleichen Sprühtrocknungsbedingungen liegt der Feinstaubanteil bei der Verarbeitung bimodaler Dispersionen stets beträchtlich niedriger als beim Verarbeiten von vergleichbaren unimodalen Dispersionen gleicher Viskosität. In günstigen Fällen ist der Feinstaubgehalt auf die Hälfte bis ein Viertel des Wertes für unimodale Dispersionen vermindert. Der Unterschied ist umso größer, je weniger verglast die Körnchen und je kleiner ihre Größe ist.

Die Schüttgewichte typischer Pulver gemäß der Erfindung liegen zwischen 350 und 550 g/l, während man unter vergleichbaren Sprühtrocknungsbedingungen aus unimodalen Dispersionen nur Schüttgewichte von 300 bis 400 g/l erreicht. Beim Übergang von unimodalen zu bimodalen Dispersionen gleicher Viskosität nimmt das Schüttgewicht in der Regel um 10 bis 30 % zu.

Herstellung von Saatlatices

A. In einem 100 l fassenden Rührgefäß aus rostfreiem Stahl, ausgerüstet mit einem Rückflußkühler, Rührwerk und Zulaufgefäß, werden bei 80°C 0,056 kg Ammoniumperoxodisulfat und 0,56 kg eines Emulgators, bestehend aus einem Umsetzungsprodukt aus Tri-isobutylphenol und 7 Mol Äthylenoxid, das sulfatiert und in das Natriumsalz übergeführt ist, in 34,2 kg dest. Wasser gelöst. In diese Lösung wird unter Rühren innerhalb 60 Min. eine zuvor aus 2,772 kg Methylmethacrylat, 3,168 kg Butylacrylat, 0,24 kg Methacrylsäure, 0,021 kg des oben genannten Emulgators und 6,0 kg dest. Wasser hergestellte Emulsion bei 80°C getropft. Anschließend wird innerhalb 3 Std. eine Emulsion bestehend aus 8,316 kg Methylmethacrylat, 9,504 kg Butylacrylat, 0,063 kg des oben genannten Emulgators, 0,028 kg des oben genannten Initiators und 18 kg dest. Wasser zudosiert. Danach wird der Ansatz 2 Std. bei 80°C gehalten, dann auf Raumtemperatur abgekühlt.
Man erhält eine koagulatfreie Dispersion mit einem Festkörpergehalt von 30 Gew.-%; pH-Wert 2,5; Viskosität 43 mPa sec, Teilchengröße: 0,044 µm.

B. In einem Witt'schen Topf (2 l) mit Rückflußkühler, Rührwerk und Zulaufgefäß werden 0,35 g des Natriumsalzes des 4,4'-Azo-bis-(4-cyanovaleriansäure) und 14 g einer Emulgatorsäure der Formel i-$C_9H_{19}$-$C_6H_4$-O($C_2H_4$O)$_5$-$PO_3H_2$ in 580 g Wasser gelöst. In diese Lösung wird unter Rühren innerhalb 4 Std. eine zuvor aus 552 g Äthylmethacrylat, 48 g 2-Hydroxypropylacrylat, 4,2 g Dodecylmercaptan, 14 g des oben genannten Emulgators, 0,7 g des oben genannten Initiators und 912 g Wasser hergestellte Emulsion bei 80°C zugetropft. Danach wird der Ansatz 2 Std. bei 80°C gehalten, dann auf Raumtemperatur abgekühlt.
Man erhält eine koagulatfreie Dispersion mit einem Festkörpergehalt von 30 Gew.-%, pH-Wert von 5,5, Viskosität von 45 mPa.s
und einer Teilchengröße von 0,060 µm.

Herstellung unimodaler Dispersionen

C. In einem 100 l fassenden Rührgefäß werden bei 80°C 4 g
Ammoniumperoxodisulfat und 4 g $C_{15}$-Paraffinsulfonat in 16 kg
Wasser gelöst. Dazu wird innerhalb 3 Std. eine zuvor aus
35,2 kg Methylmethacrylat, 4,8 kg Butylmethacrylat, 0,188 kg
des oben genannten Emulgators, 12 g des oben genannten
Initiators und 24,2 kg Wasser hergestellte Emulsion bei 80°C
zugetropft. Nach Zugabe von 4 g des Initiators wird noch 2 Std.
bei 80°C gerührt und dann auf Raumtemperatur abgekühlt.
Man erhält eine koagulatfreie Dispersion mit einem Festkörpergehalt von 50 Gew.-%, einem pH-Wert von 3,3, einer Viskosität
von 31 mPa.s und einer Teilchengröße von 0,38 µm.

D. In einem Rührgefäß (6 l) werden 0,3 g Ammoniumperoxodisulfat
und 4,2 g $C_{15}$-Paraffinsulfonat in 1200 g Wasser gelöst. Dazu
wird unter Rühren innerhalb 3 Std. eine zuvor aus 2640 g
Methylmethacrylat, 360 g Butylmethacrylat, 14,1 g des oben
genannten Emulgators, 0,9 g des oben genannten Initiators und
1736 g Wasser hergestellte Emulsion bei 80°C zugetropft, dann
nochmals 0,3 g des Initiators zugesetzt, noch 2 Std. bei 80°C
gehalten, dann auf Raumtemperatur abgekühlt.
Man erhält eine Dispersion mit einem Festkörpergehalt von
50 Gew.-%, einem pH-Wert von 3,4, einer Viskosität von
9200 mPa.s und einer Teilchengröße von 0,12 µm. Vor der Sprühtrocknung wurde die Dispersion auf einen Feststoffgehalt von
45 % verdünnt.

- 18 -

E. Das Verfahren C wird mit 68 g statt 4 g Paraffinsulfonat wiederholt und führt zu einer Dispersion mit einem Feststoffgehalt von 50 Gew.-%, einem pH-Wert von 3,3, einer Viskosität von 15.200 mPa.s und einer Teilchengröße von 0,064 µm. Vor der Sprühtrocknung wird die Dispersion auf einen Feststoffgehalt von 40 % verdünnt.

F. Das Verfahren C wird mit 6,8 g statt 4 g Paraffinsulfonat wiederholt und führt zu einer Dispersion mit einem Festkörpergehalt von 49,6 %, einem pH-Wert von 3,3, einer Viskosität von 46 mPa.s und einer Teilchengröße von 0,33 µm.

G. Herstellung einer Dispersion analog F im größeren Maßstab. Feststoffgehalt 50,0 %; Viskosität 200 mPa.s; Teilchendurchmesser 0,27 µm.

H. Man verfährt wie bei D, jedoch mit folgendem Ansatz:

Vorlage:

0,3 g Ammoniumperoxodisulfat
0,9 g $C_{15}$-Paraffinsulfonat
1200 g dest. Wasser

Zulauf:

2580 g Methylmethacrylat
360 g Butylmethacrylat
14,1 g $C_{15}$-Paraffinsulfonat
0,9 g Ammoniumperoxodisulfat
1816 g dest. Wasser

Nach 2 Std. Zulauf werden der Emulsion 60 g N-Vinylimidazol zugesetzt.

Man erhält eine koagulatfreie Dispersion mit einem Festkörpergehalt von 50 Gew.-%, einem pH-Wert von 7,8, einer Viskosität
von 260 mPa.s und einer Teilchengröße von 0,23 µm.

I. Bei 80°C werden 8 g Ammoniumperoxodisulfat und 12 g
$C_{15}$-Paraffinsulfonat in 16 kg Wasser gelöst und unter Rühren
innerhalb 90 Min. die Emulsion 1 zugetropft.

Emulsion 1:    10,0   kg Butylmethacrylat
               9,6    kg Methylmethacrylat
               0,4    kg N-Vinylimidazol
               0,094  kg $C_{15}$-Paraffinsulfonat
               0,004  kg Ammoniumperoxodisulfat
               12,4   kg dest. Wasser

Anschließend erfolgt die Zugabe der Emulsion 2 innerhalb
90 Min.

Emulsion 2:    20,0   kg Methylmethacrylat
               0,094  kg $C_{15}$-Paraffinsulfonat
               0,004  kg Ammoniumperoxodisulfat
               12,4   kg dest. Wasser

Nach Zulaufende wird der Ansatz 2 Std. bei 80°C gehalten, dann
auf Raumtemperatur abgekühlt.
Man erhält eine koagulatfreie Dispersion mit einem Festkörpergehalt von 50 Gew.-%, einem pH-Wert von 7,0, einer Viskosität
von 94 mPa.s und einer Teilchengröße von 0,27 µm.

K. 0,72 g Ammoniumperoxodisulfat und 5,04 g $C_{15}$-Paraffinsulfonat

- 20 -

werden in 1440 g dest. Wasser gelöst und unter Rühren innerhalb 90 Min. die Emulsion 1 zugetropft.

Emulsion 1:  600 g Butylmethacrylat
      576 g Methylmethacrylat
       24 g N-Vinylimidazol
      8,46 g $C_{15}$-Paraffinsulfonat
      0,36 g Ammoniumperoxodisulfat
     1068 g dest. Wasser

Anschließend erfolgt die Zugabe der Emulsion 2 innerhalb 90 Min.

Emulsion 2:  1200 g Methylmethacrylat
      8,46 g $C_{15}$-Paraffinsulfonat
      0,36 g Ammoniumperoxodisulfat
     1068 g dest. Wasser

Nach Zulaufende wird der Ansatz 2 Std. bei 80°C gehalten, dann auf Raumtemperatur abgekühlt.
Man erhält eine koagulatfreie Dispersion mit einem Festkörpergehalt von 40 Gew.-%, einem pH-Wert von 6,8, einer Viskosität von 26 mPa.s und einer Teilchengröße von 0,11 µm.

L. Man verfährt wie bei D, jedoch mit folgendem Ansatz:

Vorlage:  0,42 g Ammoniumperoxodisulfat
    0,08 g $C_{15}$-Paraffinsulfonat
    0,5 g Saatlatex A
   338 g dest. Wasser

- 21 -

Zulauf:                  1102    g Methylmethacrylat
                          58    g Äthylacrylat
                           8,3  g $C_{15}$-Paraffinsulfonat
                         508    g dest. Wasser

Charakterisierung des erhaltenen Emulsionspolymerisats:
Festkörpergehalt 55 %; pH 3,2; Viskosität 850 mPa.s; Teilchendurchmesser 0,34 μm.

M. Man verfährt wie in D, jedoch mit folgendem Ansatz:

Vorlage:                   0,8  g $C_{15}$-Paraffinsulfonat
                           1,7  g Ammoniumperoxodisulfat
                           6    g Saatlatex A
                         400    g dest. Wasser

Zulauf:                    7,2  g $C_{15}$-Paraffinsulfonat
                          22    g Ammoniumperoxodisulfat
                         440    g Methylmethacrylat
                         500    g Styrol
                          50    g Äthylacrylat
                          10    g Methacrylsäure
                         610    g dest. Wasser

Die Zulaufdauer beträgt 4 Stunden. Nach Abkühlen auf Raumtemperatur wird die Dispersion mit 25 %iger $NH_3$-Lösung auf
pH 7,0 eingestellt.
Feststoffgehalt 50 Gew.-%; Viskosität 35 mPa.s; Teilchendurchmesser 0,30 μm.

N. Man verfährt wie bei D, jedoch mit folgendem Ansatz:

| Vorlage: | | |
|---|---|---|
| 0,48 | g | Ammoniumperoxodisulfat |
| 0,48 | g | $C_{15}$-Paraffinsulfonat |
| 1,5 | g | Saatlatex A |
| 960 | g | dest. Wasser |

| Zulauf: | | |
|---|---|---|
| 3132 | g | Methylmethacrylat |
| 432 | g | Butylmethacrylat |
| 36 | g | Methacrylsäure |
| 35,5 | g | $C_{15}$-Paraffinsulfonat |
| 0,72 | g | Ammoniumperoxodisulfat |
| 1422 | g | dest. Wasser |

Nach dem Abkühlen wird die Dispersion mit 25 %iger $NH_3$-Lösung auf pH 7,5 eingestellt.
Man erhält eine Dispersion mit einem Festkörpergehalt von 60 Gew.-%, einer Viskosität von 3600 mPa.s und einer Teilchengröße von 0,37 µm. Vor der Sprühtrocknung wird die Dispersion mit dest. Wasser auf einen Feststoffgehalt von 58 % verdünnt.

O. Man verfährt wie bei D, jedoch mit folgendem Ansatz:

| Vorlage: | | |
|---|---|---|
| 0,05 | g | Isononylphenol, fünffach oxäthyliert und phosphatiert |
| 0,5 | g | 4,4'-Azobis-(4-cyanovaleriansäure), Natriumsalz |
| 400 | g | dest. Wasser |

Zulauf:           920   g Äthylmethacrylat

                   80   g 2-Hydroxypropylacrylat

                    7   g Dodecylmercaptan

                    1   g des oben genannten Initiators

                  5,5 g des oben genannten Emulgators

                  600   g dest. Wasser


Zulaufdauer 4 Stunden.

Feststoffgehalt 50 Gew.-%; Teilchendurchmesser 0,36 µm;

Viskosität 40 mPa.s; pH 4,4.


Herstellung bimodaler Dispersionen


P. In einem Rührgefäß werden 0,3 g Ammoniumperoxodisulfat, 0,3 g $C_{15}$-Paraffinsulfonat und 3 g Saatlatex A in 1200 g Wasser vorgelegt. Unter Rühren wird innerhalb 3 Std. eine zuvor aus 2640 g Methylmethacrylat, 360 g Butylmethacrylat, 14,7 g des oben genannten Emulgators, 0,9 g des oben genannten Initiators und 1741 g Wasser hergestellte Emulsion bei 80°C zugetropft. 70 Min. nach Zulaufbeginn werden der Dispersion 6 g $NH_3$-Lösung (25 %ig) und innerhalb 10 Min. 60 g Saatlatex A ohne Unterbrechung des Emulsionszulaufs zugegeben. Danach werden 0,3 g des Initiators zugesetzt und der Ansatz 2 Std. bei 80°C gehalten, dann auf Raumtemperatur abgekühlt.

Man erhält eine koagulatfreie Dispersion mit einem Festkörpergehalt von 50 Gew.-%, einem pH-Wert von 4,2 und einer Viskosität von 23 mPa.s. Die Dispersion enthält zu 25 % Teilchen mit einem Durchmesser von 0,12 µm und zu 75 % Teilchen mit einem Durchmesser von 0,39 µm.


Q. Bei 80°C werden 4,8 g Ammoniumperoxodisulfat, 4,8 g $C_{15}$-Paraffinsulfonat und 20 g Saatlatex A in 12,8 kg Wasser vorgelegt und

- 24 -

unter Rühren innerhalb 3 Std. eine zuvor aus 42,2 kg Methylmethacrylat, 5,8 kg Butylmethacrylat, 0,235 kg des oben genannten Emulgators, 14 g des oben genannten Initiators und 19,0 kg Wasser hergestellte Emulsion bei 80°C zugetropft.

75 Min. nach Zulaufbeginn werden der Dispersion innerhalb 10 Min. 0,96 kg Saatlatex A ohne Unterbrechung des Emulsionszulaufs zugegeben. Nach Ende des Zulaufs werden nochmals 4,8 g des oben genannten Initiators zugegeben, 2 Std. bei 80°C gehalten und auf Raumtemperatur abgekühlt.

Man erhält eine Dispersion mit einem Festkörpergehalt von 60 Gew.-%, einem pH-Wert von 3,2 und einer Viskosität von 760 mPa.s. Die Dispersion enthält zu 18 % Teilchen mit einem Durchmesser von 0,13 µm und zu 82 % Teilchen mit einem von 0,39 µm.

R. Herstellung einer Dispersion analog Q im größeren Maßstab. Trockengehalt 59 Gew.-%; Viskosität 850 mPa.s; 22 % der Teilchen besitzen einen Durchmesser von 0,12 µm und 78 % einen Durchmesser von 0,34 µm.

S. In eine Mischung aus 0,24 g Ammoniumperoxodisulfat, 0,18 g $C_{15}$-Paraffinsulfonat und 6 g Saatlatex A in 960 g dest. Wasser wird innerhalb 3 Std. eine zuvor aus 3096 g Methylmethacrylat, 432 g Butylmethacrylat, 23,8 g des oben genannten Emulgators, 0,72 g des oben genannten Initiators und 1740 g Wasser hergestellte Emulsion bei 80°C eingetropft. Nach 40 Min. werden der Dispersion 6 g $NH_3$-Lösung (25 %ig) und innerhalb 10 Min. 60 Gramm Saatlatex A zugegeben. 2 Std. nach Beginn des Zulaufs werden der Emulsion 72 g N-Vinylimidazol zugesetzt. Dann werden 0,3 g des Initiators zugegeben, 2 Std. bei 80°C gehalten und abgekühlt.

Man erhält eine Dispersion mit einem Festkörpergehalt von 57 Gew.-%, einem pH-Wert von 7,2 und einer Viskosität von 1350 mPa.s. Die Dispersion enthält zu 66 % Teilchen mit einem Durchmesser von 0,17 μm und zu 34 % Teilchen mit einem Durchmesser von 0,30 μm.

T. Man verfährt wie bei P.

Vorlage:       0,42 g Ammoniumperoxodisulfat
               0,08 g $C_{15}$-Paraffinsulfonat
               0,5  g Saatlatex (Beispiel A)
               320  g dest. Wasser

Zulauf:        1140  g Methylmethacrylat
               60    g Äthylacrylat
               8,3   g $C_{15}$-Paraffinsulfonat
               480   g dest. Wasser

Zugabe von 20 g Saatlatex A 75 Min. nach Zulaufbeginn. Festkörpergehalt 60 Gew.-%; pH 3,2; Viskosität 1300 mPa.s; 27 % der Teilchen besitzen einen Durchmesser von 0,12 μm, 73 % einen Durchmesser von 0,34 μm.

U. Man geht wie bei T vor, setzt aber 450 g Wasser statt 490 g ein und gibt 40 Min. nach Zulaufbeginn 10 g und 95 Min. nach Zulaufbeginn 100 g Saatlatex A hinzu. Festkörpergehalt 57,8 %; pH 3,3; Viskosität 1750 mPa.s; 22 % der Teilchen besitzen einen Durchmesser von 0,08 μm, 11 % einen Durchmesser von 0,13 μm und 67 % einen Durchmesser von 0,28 μm.

- 26 -

V. Man verfährt wie bei M, verwendet aber folgenden Ansatz:

Vorlage:
0,8 g $C_{15}$-Paraffinsulfonat
1,7 g Ammoniumperoxodisulfat
6 g Saatlatex A
320 g Wasser

Zulauf:
8,3 g $C_{15}$-Paraffinsulfonat
25 g Ammoniumperoxodisulfat
510,4 g Methylmethacrylat
500 g Styrol
50 g Äthylacrylat
11,6 g Methacrylsäure
480 g dest. Wasser

Nach 50 Min. des Zulaufs werden innerhalb von 10 Min. 20 g des Saatlatex A eingetropft.
Feststoffgehalt 57 Gew.-%; Viskosität 750 mPa.s; pH 7,0; 58 % der Teilchen besitzen einen Durchmesser von 0,18 μm, 42 % der Teilchen besitzen einen Durchmesser von 0,25 μm.

W. Man verfährt wie bei N, tropft aber 75 Min. nach Zulaufbeginn 72 g Saatlatex A ohne Unterbrechung des Zulaufs in die Dispersion
Man erhält eine koagulatfreie Dispersion mit einem Festkörpergehalt von 60 Gew.-%, einem pH-Wert von 3,2 und einer Viskosität von 1650 mPa.s. Die Dispersion enthält zu 20 % Teilchen mit einem Durchmesser von 0,13 μm und zu 80 % Teilchen mit einem Durchmesser von 0,40 μm.

X. 21,6 g des Natriumsalzes der 4,4'-Azobis-(4-cyanovalerian-säure) und 2,16 g einer Emulgatorsäure der Formel i-$C_9H_{19}$-$C_6H_4$-O($C_2H_4$O)$_5$-$PO_3H_2$, 0,08 kg Saatlatex B und 14,4 kg dest. Wasser werden bei 80°C vorgelegt, innerhalb 4 Std. eine zuvor aus 40,48 kg Äthylmethacrylat, 3,52 kg 2-Hydroxypropylacrylat, 0,308 kg Dodecylmercaptan, 0,243 kg des oben genannten Emulgators, 43,2 g des oben genannten Initiators und 23,7 kg Wasser hergestellte Emulsion bei 80°C eingerührt. 45 Min. nach Zulaufbeginn werden der Dispersion innerhalb 10 Min. 0,80 kg Saatlatex B ohne Unterbrechung des Emulsionszulaufs zugegeben. Nach Zulaufende wird der Ansatz 2 Std. bei 80°C gehalten, dann auf Raumtemperatur abgekühlt.

Man erhält eine koagulatfreie Dispersion mit einem Festkörpergehalt von 54 Gew.-%, einem pH-Wert von 4,3 und einer Viskosität von 1740 mPa.s. Die Dispersion enthält zu 50 % Teilchen mit einem Durchmesser von 0,20 μm und zu 50 % Teilchen mit einem Durchmesser von 0,41 μm.

Trocknen der Dispersionen

Mit Ausnahme des Beispiels 6 und des Vergleichsversuchs G wird zum Trocknen der Dispersion eine Sprühtrocknungsanlage verwendet, die mit einer schnell rotierenden Zerstäuberscheibe (20.000 UpM) ausgerüstet ist und im Gleichstrom mit Luft von 125 - 150°C durchströmt wird. Das Mengenverhältnis der Dispersion zur Luft ist so eingestellt, daß das Sprühgut die Anlage bei einer Luftaustrittstemperatur von 65 - 75°C in Form eines trockenen, feinteiligen, weißen bis durchscheinenden, keine glasigen Bestandteile enthaltenden Pulvers verläßt. Der Durchsatz an Trockenluft beträgt 400 m³/h.

- 28 -

Die Dispersionen G und R wurden in einer großtechnischen Sprühtrocknungsanlage verarbeitet. Sie ist mit einer schnell rotierenden offenen Zerstäuberscheibe (10.000 UpM) ausgerüstet und wird im Gleichstrom mit dem Sprühgut mit Luft von 190°C betrieben. Das Mengenverhältnis Dispersion/Luft ist so eingestellt, daß eine Luftaustrittstemperatur von 80°C erreicht wird.
Der Durchsatz an Trockenluft beträgt 10.000 m³/h.

In den Beispielen 1 bis 3 werden bimodale Dispersionen verarbeitet, die durch Mischen folgender unimodaler Dispersionen erzeugt worden sind:

Beispiel 1:  75 Teile Dispersion C + 25 Teile Dispersion D
Beispiel 2:  25 Teile Dispersion E + 75 Teile Dispersion F
Beispiel 3:  75 Teile Dispersion I + 25 Teile Dispersion K

In den Beispielen 4 bis 12 werden durch zweistufige Polymerisation erzeugte bimodale Dispersionen verarbeitet. In Tabelle I sind die Dispersionen charakterisiert. Für das Sprühtrocknungsverfahren sind die Eintrittstemperatur TE und die Austrittstemperatur TA der Trockenluft sowie das Schüttgewicht des erhaltenen Pulvers angegeben. Zusätzlich wird das Verhältnis der Schüttgewichte $V_b$ aus den bimodalen Dispersionen und $V_u$ aus den entsprechenden unimodalen Vergleichsdispersionen in der letzten Spalte angegeben.

Zum Vergleich wurden die unimodalen Dispersionen C bis O sprühgetrocknet. Die Dispersionen sind in Tabelle II charakterisiert. Die Angaben über das Sprühtrocknungsverfahren entsprechen denen der Tabelle I.

An den Pulvern aus der bimodalen Dispersion T und aus der unimodalen Vergleichsdispersion L wurde eine Analyse der Korngrößenverteilung durchgeführt, aus der auch der Feinstaubanteil zu entnehmen ist. Die integrale Korngrößenverteilung ist in Figur 1 graphisch dargestellt. Die Bestimmung erfolgt durch Messung der Lichtextinktion einer durch eine Meßzelle strömenden Suspension der Pulverkörner. (Meßgerät "Kratel Partoskop F", Kratel GmbH, Gerlingen)

Von dem in Beispiel 1 hergestellten Pulver wurde eine transmissions-elektronenmikroskopische Aufnahme an einem Ultradünnschnitt gemacht, die in Figur 2 wiedergegeben ist; Vergrößerung 10.500-fach.

0154189

Tabelle I

Eigenschaften der eingesetzten Dispersion [4]

| Beisp. Nr. | Bimodale Dispersion [3] | Unimodale Vergleichs- dispersion | Feststoff- gehalt (Gew.-%) | Viskosität (mPa.s) | Feinanteil Durch- messer ($\mu$m) | Anteil (%) | Grobanteil Durch- messer ($\mu$m) | Anteil (%) | Trocknungs- temperatur TE/TA (°C) | Schütt- gewicht $V_b$ (g/l) | Schüttgew.- verhältnis $V_b/V_u$ |
|---|---|---|---|---|---|---|---|---|---|---|---|
| 1 | C/D = 75/25 | C-F | 50,1 | 30 | 0,12 | 25 | 0,38 | 75 | 137/70 | 360 | 1,12 |
| 2 | E/F = 25/75 | C-F | 49,8 | 55 | 0,06 | 25 | 0,33 | 75 | 142/69 | 420 | 1,31 |
| 3 | J/K = 75/25 | I,K | 47,3 | 24 | 0,11 | 25 | 0,27 | 75 | 140/70 | 350 | 1,13 |
| 4 | P | C-F | 50,4 | 23 | 0,12 | 25 | 0,39 | 75 | 142/69 | 360 | 1,1 |
| 5 | Q | C-F | 59,9 | 760 | 0,13 | 18 | 0,39 | 82 | 137/71 | 390 | 1,2 |
| 6 | R | G | 59,0 | 850 | 0,12 | 22 | 0,34 | 78 | 190/80 | 490[1] | 1,2 |
| 7 | S | H | 57,0 | 1350 | 0,17 | 66 | 0,30 | 34 | 135/71 | 370 | 1,23 |
| 8 | T | L | 60,1 | 1300 | 0,12 | 27 | 0,34 | 73 | 125/69 | 370 | 1,12 |
| 9 | U | L | 57,8 | 1750 | 0,08 | 22 | 0,13 / 0,28 | 11 / [2] 67 | 128/73 | 420 | 1,27 |
| 10 | V | M | 57,0 | 750 | 0,18 | 58 | 0,25 | 42 | 137/69 | 370 | 1,12 |
| 11 | W | N | 60,0 | 1650 | 0,13 | 20 | 0,40 | 80 | 135/68 | 370 | 1,19 |
| 12 | X | O | 53,7 | 1740 | 0,20 | 50 | 0,41 | 50 | 138/67 | 510 | 1,26 |

1) Sprühtrocknung auf großtechnischem Sprühturm, Durchsatz 454 kg Polymerisat pro Stunde

2) Trimodale Teilchengrößenverteilung

3) Die Polymerisatzusammensetzung entspricht derjenigen der Vergleichsdispersion, vgl. Tabelle II

4) bestimmt durch Ultrazentrifugenmethode von Scholtan und Lange

Tabelle II

| Unimodale Dispersion | Polymerisatzusammensetzung | | | Eigenschaften der eingesetzten Dispersion | | | Trocknungs-temperatur TE/TA (°C) | Schütt-gewicht $V_u$ (g/l) |
|---|---|---|---|---|---|---|---|---|
| | MMA | BMA (Gew.-%) | Comonomere[5] | Feststoffgehalt (Gew.-%) | Viskosität (mPa.s) | Teilchendurch-messer[4] ($\mu$m) | | |
| C | 88 | 12 | – | 49,9 | 31 | 0,38 | 135/69 | 320 |
| D | 88 | 12 | – | 50,7 (45[1]) | 9200 | 0,12 | 135/71 | 340 |
| E | 88 | 12 | – | 50,3 (40[1]) | 15200 | 0,064 | 152/69 | 330 |
| F | 88 | 12 | – | 49,6 | 46 | 0,33 | 150/67 | 320 |
| G | 88 | 12 | – | 50,0 | 200 | 0,27 | 190/80 | 410[2] |
| H | 86 | 12 | VJm 2% | 50,0 | 260 | 0,23 | 150/71 | 300 |
| I | 74 | 25 | VJm 1%[3] | 49,6 | 94 | 0,27 | 137/69 | 310 |
| K | 74 | 25 | VJm 1%[3] | 40,5 | 26 | 0,11 | 140/68 | 320 |
| L | 95 | – | EA 5% | 55,0 | 850 | 0,34 | 135/72 | 330 |
| M | 44 | – | EA 5%, Styr 50% MAS 1% | 50,2 | 35 | 0,30 | 140/70 | 330 |
| N | 87 | 12 | MAS 1% | 60,5 (58[1]) | 3600 | 0,37 | 142/71 | 310 |
| O | – | – | EMA 92% HPA 8% | 50,3 | 40 | 0,36 | 133/70 | 400 |

1) Absenkung des Feststoffgehaltes vor der Sprühtrocknung aus Viskositätsgründen

2) Sprühtrocknung auf großtechnischem Sprühturm, Durchsatz 350 kg Polymerisat pro Stunde

3) Bruttozusammensetzung

4) Bestimmt durch Transmissionsmessung

5) Abkürzungen:   VJm = N-Vinylimidazol      MAS = Methacrylsäure      Styr = Styrol

               EA  = Ethylacrylat         MMA = Methylmethacrylat

               EMA = Ethylmethacrylat     BMA = Butylmethacrylat

Pulverförmige Emulsionspolymerisate und Verfahren zu ihrer Herstellung

Patentansprüche

1. Pulverförmiges Emulsionspolymerisat, dessen Körnchen aus aggregierten Latexteilchen eines überwiegend aus Acrylmonomeren oder deren Gemisch mit einem Styrol aufgebauten Emulsionspolymerisats mit einer Glastemperatur nicht unter 45°C zusammengesetzt sind,

dadurch gekennzeichnet,

daß die Körnchen aus aggregierten Latexteilchen mit einer bimodalen Teilchengrößenverteilung zusammengesetzt sind.

2. Pulverförmiges Emulsionspolymerisat nach Anspruch 1, dadurch gekennzeichnet, daß die Latexteilchen überwiegend lose aggregiert und höchstens schwach verglast sind.

3. Pulverförmiges Emulsionspolymerisat nach Anspruch 1 oder 2, dadurch gekennzeichnet, daß es weniger als 5 Gew.-% Feinstaub einer Korngröße unter 10 µm enthält.

4. Pulverförmiges Emulsionspolymerisat nach den Ansprüchen 1 bis 3, gekennzeichnet durch ein Schüttgewicht von mehr als 350 g/l.

5. Pulverförmiges Emulsionspolymerisat nach den Ansprüchen 1 bis 4, dadurch gekennzeichnet, daß sich die Teilchengrößenmaxima der gröberen und der feineren Teilchen um einen Faktor zwischen 1,2 und 20 unterscheiden.

6. Pulverförmiges Emulsionspolymerisat nach den Ansprüchen 1 bis 5, dadurch gekennzeichnet, daß es 20 bis 95 Gew.-% gröbere und 80 bis 5 Gew.-% feinere Teilchen enthält.

7. Verfahren zur Herstellung eines pulverförmigen Emulsionspolymerisats gemäß den Ansprüchen 1 bis 6, dadurch gekennzeichnet, daß eine bimodale wäßrige Dispersion des Emulsionspolymerisats sprühgetrocknet wird.

8. Verfahren nach Anspruch 7, dadurch gekennzeichnet, daß die Sprühtrocknung mit einer Endtemperatur durchgeführt wird, die nicht oberhalb der Glastemperatur des Emulsionspolymerisats liegt.

9. Verfahren nach den Ansprüchen 7 oder 8, dadurch gekennzeichnet, daß eine Dispersion mit einem Feststoffgehalt über 50 Gew.-% eingesetzt wird.

10. Verfahren nach Anspruch 8, dadurch gekennzeichnet, daß eine Dispersion mit einem Feststoffgehalt von wenigstens 58 Gew.-% eingesetzt wird.

Fig. 1